Europäisches Patentamt

(19) European Patent Office

Office européen des brevets

(11) Publication number : **0 373 405 B1**

(12) **EUROPEAN PATENT SPECIFICATION**

(45) Date of publication of patent specification :
16.08.95 Bulletin 95/33

(51) Int. Cl.⁶ : **H04L 27/22**

(21) Application number : **89121747.3**

(22) Date of filing : **11.12.89**

(54) **Automatic frequency control in the presence of data.**

(30) Priority : **16.12.88 US 285433**

(43) Date of publication of application :
**20.06.90 Bulletin 90/25**

(45) Publication of the grant of the patent :
**16.08.95 Bulletin 95/33**

(84) Designated Contracting States :
**AT BE CH DE ES FR GB GR IT LI LU NL SE**

(56) References cited :
**EP-A- 0 098 649
IEEE TRANSACTIONS ON COMMUNI-
CATIONS, vol. COM-27, no. 9, September 1979,
pages 1288-1295, IEEE, New York, US; D.G.
MESSERSCHMITT: "Frequency detectors for
PLL acquisition in timing and carrier re-
covery"
IEEE TRANSACTIONS ON INFORMATION
THEORY, vol. IT-29, no. 4, July 1983, pages
543-551, IEEE, New York, US; A.J. VITERBI et
al.: "Nonlinear estimation of PSK-modulated
carrier phase with application to burst digital
transmission"**

(56) References cited :
**IEEE INTERNATIONAL CONFERENCE ON
ACOUSTICS, SPEECH AND SIGNAL PROCES-
SING -ICASSP '88, New York City, NY, 11th -
14th April 1988, vol. 3, pages 1886-1889, IEEE,
New York, US; T.D. TRAN et al.: "A new carrier
frequency estimator for modem signals"
IEEE TRANSACTIONS ON COMMUNI-
CATIONS, vol. COM-32, no. 8, August 1984,
pages 935-947, IEEE, New York, US; F.D.
NATALI: "AFC tracking algorithms"
IEEE NATIONAL TELECOMMUNICATIONS
CONFERENCE - NTC '78, Birmingham, Alaba-
ma, 3rd- 6th December 1978, vol. 1, pages
6.6.1-6.6.6, IEEE, New York, US; R.J. TRACEY
et al.: "A timing phase correction technique
for PSK demodulators"**

(73) Proprietor : **MOTOROLA, INC.**
**1303 East Algonquin Road
Schaumburg, IL 60196 (US)**

(72) Inventor : **Borth, David Edward**
**825 S. Harvard Drive
Palatine Illinois 60067 (US)**
Inventor : **Kepler, James Frank Michael**
**3840 Dauphine
Northbrook Illinois 60062 (US)**

(74) Representative : **Dunlop, Hugh Christopher et
al
Motorola,
European Intellectual Property,
Midpoint,
Alencon Link
Basingstoke, Hampshire RG21 1PL (GB)**

## Description

### FIELD OF THE INVENTION

This invention is concerned with Automatic Frequency Control (AFC). More particularly, this invention is concerned with methods and apparatus for Automatic Frequency Control (AFC) in the presence of data.

### BACKGROUND OF THE INVENTION

A persistent challenge arises when attempting to provide Automatic Frequency Control (AFC) in the presence of phase-modulated data.

The phase modulation affects the frequency determination required for Automatic Frequency Control (AFC) and unless the effects of the phase-modulation can be removed, AFC in the presence of data will remain a formidable challenge.

The article entitled "Frequency Detectors for PLL Acquisition in Timing and Carrier Recovery", by D.G. Messerschmitt, published in IEEE TRANSACTIONS ON COMMUNICATIONS, vol. Com-27, no. 9, September 1979, pages 1288-1295, describes the implementation of two frequency detectors.

This invention then takes as its object to overcome these challenges and to realize certain advantages presented below.

### SUMMARY OF THE INVENTION

In accordance with a first aspect of the present invention there is provided a method of Automatic Frequency Control (AFC), characterized by the steps of: determining a channel phase rotation estimate ($\theta$) by comparing a transmitted training sequence with a stored training sequence having a known phase; using said channel phase rotation estimate ($\theta$) to adjust a quadrature-modulated signal, forming an adjusted quadrature-modulated signal ($\phi$); rotationally mapping a constellation of said adjusted quadrature-modulated signal to remove a modulation effect, forming a rotationally mapped signal; estimating, at a reference frequency, a frequency error based upon a phase difference between successive points of the rotationally mapped signal; averaging that frequency error; and adjusting the reference frequency to suppress that averaged frequency error.

In a second aspect of the present invention there is provided apparatus for Automatic Frequency Control (AFC), characterized by: means for comparing a transmitted training sequence with a stored training sequence having a known phase to determine a channel phase rotation estimate ($\theta$); means for adjusting a quadrature-modulated signal using said channel phase rotation estimate ($\theta$); means for rotationally mapping a constellation of said quadrature-modulated signal to remove a modulation effect, forming a rotationally mapped signal; means for estimating, at a reference frequency, a frequency error based upon a phase difference between successive points of the rotationally mapped signal; means for averaging that frequency error; and means for adjusting the reference frequency to suppress that averaged frequency error.

In a preferred embodiment, the means for adjusting adjusts the quadrature-modulated signal ($\phi$) into a positive quadrature quadrant. Also, the constellation may be an orthogonal constellation.

### DESCRIPTION OF THE DRAWINGS

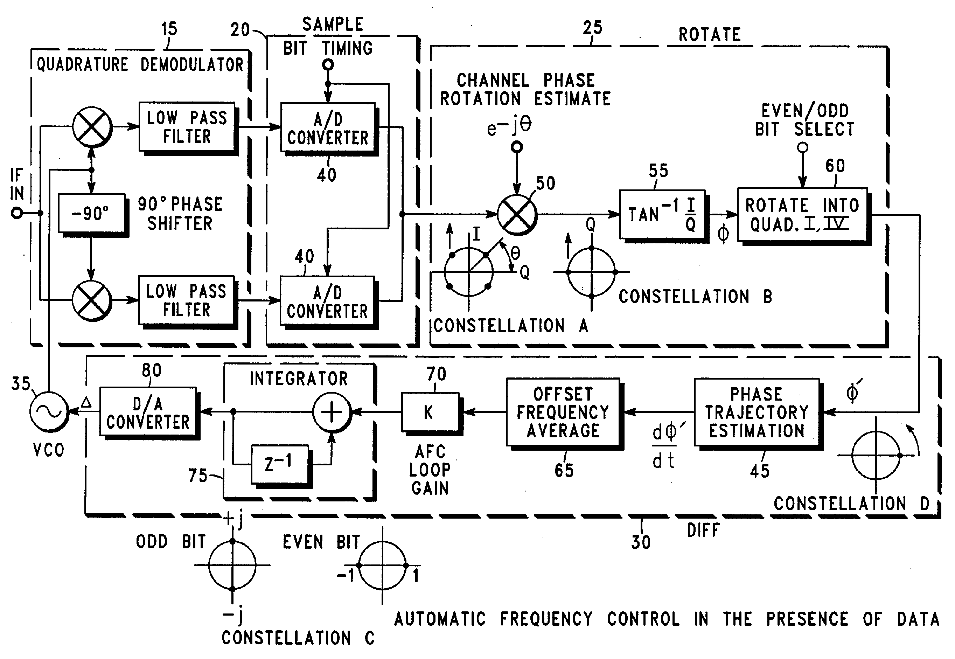

Additional objects, features and advantages of the invention will be more clearly understood and the best mode contemplated for practising it in its preferred embodiment will be appreciated (by way of unrestricted example) from the following detailed description, taken together with the accompanying drawings in which:
The single figure is a functional block diagram of the preferred embodiment and a graphical illustration of its operation.

### DETAILED DESCRIPTION

The need for AFC in coherently detecting phase modulation signals arises since even small frequency offsets between the transmitter and the receiver reference frequencies can result in a significant number of detected data errors. To demonstrate this problem, consider the following example. Assume data is sent at a 300 Kb/s data rate using Minimum Shift Keying (MSK) (or a variation of this modulation format, such as Gaussian Minimum Shift Keying, GMSK; Generalized Tamed FM, GTFM; etc.) in a Time Division Multiple Access system employing time slots of 0.5 ms in duration. Hence, a time slot consists of (300 Kb/s) x (0.5 ms) = 150 bits.

Assume further that the phase offset between the transmitter and receiver is adjusted to zero at the start of each received time slot through the use of a synchronization preamble, etc. For noise-free conditions, it can be shown that for an MSK modulation format, bits may be detected without error in the receiver provided that the phase offset between the transmitter and receiver is less than $\pi/2$ radians. As instantaneous frequency is the time derivative of phase, in order for the time slot to be received without error, it is necessary that the phase offset at the end of the slot be less than $\pi/2$ radians, i.e., that the frequency offset between the transmitter and the receiver satisfy

$$f_{offset} \leq \frac{1}{2\pi} \frac{\pi/2}{0.5 \text{ msec}} = 500 \text{ Hz}$$

To accommodate the effects of noise, in practice, it is necessary that the frequency offset be somewhat smaller than this amount, typically 200 Hz.

In a mobile radio operating at 900 MHz, a 200 Hz maximum frequency offset between the transmitter and receiver implies that both the transmitter and receiver must employ oscillators having an overall stability (over time, temperature, etc.) of better than 0.1 parts per million (ppm), a stability requirement currently met only by cesium or rubidium frequency standards and ovenized crystal oscillators. All of these oscillators are too bulky for commercial mobile radio applications. Instead, frequency reference is provided with a smaller oscillator, compromising frequency stability. Methods must be devised for controlling frequency stability in other ways. AFC circuits are one common way.

Conventional AFC circuits, such as described in J.C. Samuels' "Theory of the Band-Centering AFC System", IRE Transactions on Circuit Theory, pp. 324-330, December 1957 (see also the references contained in that paper) are designed to compensate for large frequency offsets between the transmitter and receiver in order to keep the signal within the bandwidth of the receiver's IF filter. This is usually accomplished via a frequency discriminator detector whose output is low-pass filtered to remove any data artifacts from the received signal's mean frequency. Such an approach is useful in achieving frequency offsets of approximately $\pm 1$ KHz at center frequency of 900 MHz. It is not an acceptable approach towards achieving a frequency offset of less than 200 Hz unless the transmitted signal bandwidth is less than 200 Hz (e.g., a sinusoid).

The single figure is a functional block diagram of the preferred embodiment and a graphical illustration of its operation. It depicts, coupled in series, QUADRATURE DEMODULATION 15, quadrature (I/Q) sampling (SAMPLE) 20, phase rotation toward a point of coincidence (ROTATE) 25, phase trajectory estimation to detect the frequency difference (DIFF) 30, and a Voltage Controlled Oscillator (VCO) 35.

In operation, GMSK phase-modulated data is quadrature demodulated 15 and digitized, in quadrature, in Analog-to-Digital converters (A/D) 40 as is well understood by those ordinarily skilled in this field. The digitized quadrature information is sampled in quadrature at a multiple of the modulated bit rate (Bit Timing). The I and Q phases are rotated toward a point of coincidence, namely arctangent (I/Q)=0 to remove the effects of quadrature data (I/Q) modulated onto the carrier. Then, the resultant frequency difference between the carrier phase and the frequency of a Voltage Controlled type of reference oscillator is detected with a phase trajectory estimator 45. Finally, the frequency of the reference oscillator 35 must be adjusted to eliminate the frequency difference by establishing and generating the requisite correction voltage ($\Delta$) for a Voltage Controlled type of reference oscillator (VCO) 35.

The in-phase (I) and quadrature (Q) signals are first rotated 50 by the angle $\theta$ to compensate for the phase rotation due to the radio channel between the transmitted carrier and the receiver's reference frequency. The phase of the resulting signal $\phi$ is then calculated at bit time instants T via the operation arctangent (I/Q) 55. The resulting phases $\phi$ are subsequently rotated 60 toward a point of coincidence, namely arctangent (I/Q) = 0 to remove the effects of quadrature I-Q data modulated onto the carrier. Then the frequency offset between the received carrier signal and the VCO reference oscillator signal is estimated by means of a linear fit to the phase trajectory (PHASE TRAJECTORY ESTIMATION) 45. The frequency offset estimate is averaged 65 and the average frequency offset is then used to eliminate the frequency offset by establishing and generating the requisite correction voltage $\Delta$ for a Voltage Controlled type of reference oscillator (VCO) 35.

Referring to the figure, following demodulation of the intermediate frequency (IF) signal into in-phase (I) and quadrature (Q) signals via a conventional quadrature demodulator 15, the I and Q signals are subsequently converted into digital format signals via two analog-to-digital (A/D) converters 40 operating at a sampling rate equal to a multiple of the data rate (1/T). Noting that an MSK-type signal can also be represented as an Offset-Quadrature Phase Shift Keyed (O-QPSK) signal with a 4-point constellation having (ideally) points at 0°, 90° 180°, and 270°, the received signal at the output of the A/D converters will, in general, be rotated at an angle $\theta$ with respect to the receiver's VCO signal due to the radio frequency channel (Constellation A).

This initial phase offset $\theta$ may be estimated via a phase-tracking loop and/or a channel sounding receiver structure.

The initial phase offset $\theta$ is compensated for by a complex phase rotation process 50 which multiplies the signal Q + jI by the complex exponential exp (-j$\theta$), thereby rotating the signal constellation by an angle -$\theta$ and

restoring the signal constellation (initially) to the ideal constellation pattern described previously (Constellation B).

The arctangent (I/Q) operation 55 then estimates the angle $\phi$ at which the received signal is detected. In the absence of a frequency offset and noise, for an MSK signal, the angle $\phi$ will correspond to one of the four constellation points shown in Constellation B. In general, the phase trajectory $\phi$ as a function of time is of interest since the time derivative of the phase $\phi$ <u>in the absence of data modulation</u> is proportional to the frequency offset between the received carrier signal and the VCO signal. In the presence of data modulation, however, the time derivative of $\phi$ will also be a function of the received data.

To eliminate the effects of the quadrature I-Q data modulated onto the carrier from the offset frequency estimation process, the angle $\phi$ is rotated 60 into quadrants I and IV as decribed below:

As already noted above, an MSK-type signal can also be described as an O-QPSK signal. This implies that at bit-time spaced intervals, the signal (Constellation B) may be represented as either a two-bit (biphase) odd-bit constellation with points at $\pm90°$ or as a two-bit even-bit constellation with points at $0°$ and $180°$ (see Constellation C). The two two-bit constellations alternate every bit time. The rules for rotating phases ($\phi$) into quadrants I and IV thus become:

<div align="center">

## EVEN BIT

</div>

<u>INITIAL PHASE $\phi$</u>                  <u>FINAL PHASE $\phi'$</u>

$-90° \leq \phi \leq 90°$                  $\phi' = \phi$

$-180° < \phi < -90°$                  $\phi' = \phi + 180°$

$180° > \phi > 90°$                  $\phi' = \phi - 180°$

<div align="center">

## ODD BIT

</div>

$\phi > 0°$                  $\phi' = \phi - 90°$

$\phi < 0°$                  $\phi' = \phi + 90°$

Note that even though no actual data bit values are determined in this phase rotation process, the effects of data modulated onto the carrier are effectively removed by rotating 60 the phase $\phi$ in this manner into quadrants I and IV as shown in Constellation D, i.e., all four constellation points of Constellation B have now been mapped into a single point at $0°$.

In the absence of frequency offsets and noise, the last statement is true only for pure MSK. For GMSK signals, the mapping $\phi \rightarrow \phi'$ described above will only map the four quadrants into quadrants I and IV due to the data filtering effects present in GMSK signal generation. Nevertheless, this latter phase rotation 60 has effectively removed the effects of quadrature data on the received carrier.

The phase trajectory of the rotated angle $\phi'$ as a function of time is then used to estimate the actual frequency offset 45. As noted above, the instantaneous frequency is equal to the time derivative of the phase. In the absence of noise, with the effects of data removed from the recovered, phase-rotated phase signal $\phi'$, the instantaneous frequency is proportional to the frequency offset between the received carrier frequency and the VCO 35. Hence, the phase trajectory estimation block 45 estimates the phase trajectory of $\phi'$ as a function of time and processes the phase trajectory to estimate the instantaneous frequency.

Three methods may be employed by the phase trajectory estimation block to estimate the frequency offset:

(1.) Take the discrete-time time derivative of $\phi'$ via the operation

$$\hat{f}_{offset} \approx \frac{\phi'|_{time = t_2} - \phi'|_{time = t_1}}{t_2 - t_1}$$

for every time $t_i$. The frequency offset $\hat{f}_{offset}$ must be subsequently smoothed to remove any noise artifacts.

(2.) Let $\phi'_i = max[\phi'_1, \phi'_2, ... \phi'_n]$ and

<div align="center">

4

</div>

$\phi'_j = \max [\phi'_m, \phi'_{m+1}, \dots \phi'_{m+n+1}]$where $\phi_1$, $\phi_2$,...are <u>consecutive</u> values of $\phi'$ at bit time instants and m >> n.

Then $\hat{f}_{offset} \approx \dfrac{\phi_j - \phi_i}{j - i}$

(3.) Form a least squares linear fit to the $\phi'$. The slope of the least squares linear fit is proportional to the instantaneous frequency; i.e. if $\phi'_{-m}$, $\phi'_{-m+1}, \dots \phi'_o$, $\phi'_1$, $\phi'_m$ are a collection of 2M+1 equally-spaced values of $\phi'$, then the least-squares linear fit has a slope of

$$\hat{f}_{offset} = \frac{\sum\limits_{n=-m}^{m} n\, \phi'_n}{\sum\limits_{n=-m}^{m} n^2}$$

Following phase trajectory estimation 45, the output of the phase ion block is subsequently filtered (via a first-order IIR filter of the type well-understood by those ordinarily skilled in this field) 65, multiplied by a gain constant K (which also determines the loop dynamics) 70, integrated 75 and converted back into an analog signal via a Digital-to-Analog converter (D/A) 80. The output of the D/A converter 80 provides a correction voltage $\Delta$ to the VCO 35 which adjusts the frequency of the VCO 35 to compensate for the offset frequency error.

In summary then, there has been provided a method of and apparatus for Automatic Frequency Control (AFC) in the presence of data. It comprises removing the effects of data modulated onto the carrier, detecting the frequency difference between the carrier frequency and the frequency of the reference oscillator, and adjusting the frequency of the reference oscillator to eliminate the frequency difference.

It has further been characterized by digitizing the modulated carrier in quadrature, sampling the modulated carrier in quadrature at a multiple of the modulated bit rate, rotating phases toward arctangent (I/Q)=0 to remove the effects of quadrature data (I/Q) modulated onto the carrier, detecting the frequency difference between the carrier frequency and the frequency of a Voltage Controlled type of reference oscillator with a phase trajectory estimator, adjusting the frequency of the reference oscillator by the frequency difference, and establishing and generating the requisite correction voltage for a Voltage Controlled type of reference oscillator (VCO) with the phase trajectory estimator.

While the preferred embodiment of the invention has been described and shown, it will be appreciated by those skilled in the art that other variations and modifications of this invention may be implemented. For example, the phase trajectory estimator may be replaced with either a fixed Wiener filter which estimates the time derivative of the phase $\phi'$ using a minimum mean square estimate method or with a recursive Kalman filter to estimate the time derivative of $\phi'$.

## Claims

1. A method of Automatic Frequency Control (AFC), characterized by the steps of:

   determining a channel phase rotation estimate ($\theta$) by comparing a transmitted training sequence with a stored training sequence having a known phase;

   using said channel phase rotation estimate ($\theta$) to adjust a quadrature-modulated signal, forming an adjusted quadrature-modulated signal ($\phi$);

   rotationally mapping (60) a constellation of said adjusted quadrature-modulated signal to remove a modulation effect, forming a rotationally mapped signal;

   estimating (45), at a reference frequency, a frequency error based upon a phase difference between successive points of the rotationally mapped signal;

   averaging (75) that frequency error; and

   adjusting (80) the reference frequency to suppress that averaged frequency error.

2. The method of Automatic Frequency Control (AFC) according to claim 1, wherein the constellation is an orthogonal constellation.

3. Apparatus for Automatic Frequency Control (AFC), characterized by:

means for comparing a transmitted training sequence with a stored training sequence having a known phase to determine a channel phase rotation estimate (θ);

means (50) for adjusting a quadrature-modulated signal using said channel phase rotation estimate (θ);

means (60) for rotationally mapping a constellation of said quadrature-modulated signal to remove a modulation effect, forming a rotationally mapped signal;

means (45) for estimating, at a reference frequency, a frequency error based upon a phase difference between successive points of the rotationally mapped signal;

means (75) for averaging that frequency error; and

means (80) for adjusting the reference frequency to suppress that averaged frequency error.

4. Apparatus for Automatic Frequency Control (AFC) according to claim 3, wherein said means (50) for adjusting adjusts the quadrature-modulated signal (φ) into a positive quadrature quadrant.

5. Apparatus for Automatic Frequency Control (AFC) according to claim 3 or 4, wherein the constellation is an orthogonal constellation.


**Patentansprüche**

1. Ein Verfahren zur automatischen Frequenzregelung, **gekennzeichnet durch** die Schritte:

Bestimmen einer Kanalphasendrehungsabschätzung (θ) durch Vergleichen einer gesendeten Übungssequenz mit einer gespeicherten Übungssequenz, die eine bekannte Phase hat;

Verwenden der genannten Kanalphasendrehungsabschätzung (θ), um ein quadratur-moduliertes Signal einzustellen, wobei ein eingestelltes quadratur-moduliertes Signal (Φ) gebildet wird;

Rotationsabbilden (60) einer Konstellation des genannten eingestellten, quadratur-modulierten Signals, um eine Modulationswirkung zu entfernen, wobei ein rotationsabgebildetes Signal gebildet wird;

Abschätzen eines Frequenzfehlers bei einer Bezugsfrequenz auf der Grundlage einer Phasendifferenz zwischen aufeinanderfolgenden Punkten des rotationsabgebildeten Signals;

Mitteln (75) dieses Frequenzfehlers; und

Einstellen (80) der Bezugsfrequenz, um diesen gemittelten Frequenzfehler zu unterdrücken.

2. Das Verfahren zur automatischen Frequenzregelung gemäß Anspruch 1, in dem die Konstellation eine orthogonale Konstellation ist.

3. Vorrichtung zur automatischen Frequenzregelung, **gekennzeichnet durch:**

Eine Einrichtung zum Vergleichen einer gesendeten Übungssequenz mit einer gespeicherten Übungssequenz, die eine bekannte Phase hat, um eine Kanalphasenrotationsabschätzung (θ) zu bestimmen;

eine Einrichtung (50) zum Einstellen eines quadraturmodulierten Signals unter Verwendung der genannten Kanalphasenrotationsabschätzung (θ);

eine Einrichtung (60) zum Rotationsabbilden einer Konstellation des genannten quadratur-modulierten Signals, um eine Modulationswirkung zu entfernen, wobei ein rotationsabgebildetes Signal gebildet wird;

eine Einrichtung (45) zum Abschätzen eines Frequenzfehlers bei einer Bezugsfrequenz auf der Grundlage einer Phasendifferenz zwischen aufeinanderfolgenden Punkten des rotationsabgebildeten Signals;

eine Einrichtung (75) zum Mitteln dieses Frequenzfehlers; und

eine Einrichtung (80) zum Einstellen der Bezugsfrequenz, um diesen gemittelten Frequenzfehler zu unterdrücken.

4. Vorrichtung zur automatischen Frequenzregelung gemäß Anspruch 3, in der die genannte Einrichtung (50) zum Einstellen das quadratur-modulierte Signal (θ) in einen positiven Quadratur-Quadranten einstellt.

5. Vorrichtung zur automatischen Frequenzregelung gemäß Anspruch 3 oder 4, in der die Konstellation eine orthogonale Konstellation ist.

## Revendications

1. Procédé de Commande de Fréquence Automatique (CAF) caractérisé par les étapes suivantes :

   détermination d'une estimation de la rotation de phase de la voie ($\theta$) en comparant une séquence d'essai transmise et une séquence d'essai enregistrée ayant une phase connue ;

   utilisation de ladite estimation de la rotation de phase de la voie ($\theta$) pour régler un signal modulé en quadrature, produisant un signal modulé en quadrature et réglé ($\phi$) ;

   projection (60) par rotation de la constellation dudit signal modulé en quadrature et réglé afin d'éliminer un effet de modulation, produisant un signal projeté par rotation ;

   estimation (45), par rapport à une fréquence de référence, d'une erreur de fréquence fondée sur une différence de phase entre des points successifs du signal projeté par rotation ;

   Moyennage (75) de cette erreur de fréquence ; et réglage (80) de la fréquence de référence pour supprimer cette erreur de fréquence dont la moyenne a été établie.

2. Procédé de Commande de Fréquence Automatique (CAF) selon la revendication 1, dans lequel la constellation est une constellation orthogonale.

3. Appareil permettant une Commande de Fréquence Automatique (CAF), caractérisé par :

   un moyen de comparaison d'une séquence d'essai transmise avec une séquence d'essai mémorisée ayant une phase connue pour déterminer une estimation de la rotation de phase de la voie ($\theta$) ;

   un moyen (50) de réglage d'un signal modulé en quadrature en utilisant ladite estimation de la rotation de phase de la voie ($\theta$) ;

   un moyen (60) de projection par rotation d'une constellation dudit signal modulé en quadrature afin d'éliminer un effet de modulation, produisant un signal projeté par rotation ;

   un moyen estimation (45), par rapport à une fréquence de référence, d'une erreur de fréquence fondée sur une différence de phase entre des points successifs du signal projeté par rotation ;

   un moyen (75) de moyennage de cette erreur de fréquence; et

   un moyen (80) de réglage de la fréquence de référence pour supprimer cette erreur de fréquence moyennée.

4. Appareil permettant une Commande de Fréquence Automatique (CAF) selon la revendication 3, dans lequel ledit moyen (50) de réglage règle le signal modulé en quadrature ($\phi$) par rapport à un quadrant en quadrature positif.

5. Appareil permettant une Commande de Fréquence Automatique (CAF) selon la revendication 3 ou 4, dans lequel la constellation est une constellation orthogonale.

CONSTELLATION A

CONSTELLATION B

CONSTELLATION C

CONSTELLATION D

AUTOMATIC FREQUENCY CONTROL IN THE PRESENCE OF DATA

EP 0 373 405 B1